# DEMANDE DE BREVET EUROPEEN

(11) **EP 2 636 559 A1**
(43) Date de publication de la demande: **11.09.2013**
(21) Numéro de dépôt: 12360015.7
(22) Date de dépôt: 07.03.2012
(51) Int. Cl.: B60P 7/08

(54) **Dispositif d'enroulement automatique de sangles**

(71) Demandeur: Abandarat, Driss, 68000 Colmar (FR)
(72) Inventeur: Abandarat, Driss, 68000 Colmar (FR)
(74) Mandataire: Koelbel, Caroline

(57) **Abrégé**

La présente invention concerne un dispositif (1) d'enroulement automatique de sangles (2), notamment de sangles pour l'arrimage d'un chargement. Il comporte un boîtier (3) fermé par un couvercle (31) à l'intérieur duquel s'étendent au moins un axe d'enroulement (4) pour une sangle (2), et des moyens de guidage de ladite sangle (2) entre une ouverture d'entrée (30) et ledit axe d'enroulement (4), lequel est entraîné en rotation par un moteur (5) et est agencé pour permettre l'accrochage d'une extrémité (20) de ladite sangle (2) à enrouler.

## Description

### Domaine technique :

La présente invention concerne un dispositif d'enroulement automatique de sangles, notamment de sangles pour l'arrimage d'un chargement, comportant un boîtier fermé par un couvercle à l'intérieur duquel s'étendent au moins un axe d'enroulement pour une sangle et des moyens de guidage de ladite sangle entre une ouverture d'entrée que comporte ledit boîtier et ledit axe d'enroulement, ledit axe d'enroulement étant agencé pour permettre l'accrochage temporaire d'une extrémité de ladite sangle à enrouler.

### Technique antérieure :

Les règlementations en vigueur en matière de transport de marchandises imposent l'emploi systématique de sangles d'arrimage pour réaliser la sécurisation d'un chargement, quel que soit le type de camion, qu'il soit bâché ou non.

Afin d'accroître encore le niveau de sécurité d'un chargement, certains pays exigent en outre, à cet effet, l'emploi de sangles régulièrement nettoyées et entretenues, permettant une vérification visuelle de leur état d'usure, et un éventuel remplacement immédiat en cas de défaut avéré.

La douzaine, voire quinzaine de sangles nécessaire en moyenne pour arrimer convenablement un chargement implique par conséquent une gestion spécifique, qui représente à ce jour pour un chauffeur de poids-lourds une charge de travail supplémentaire particulièrement pénible, fastidieuse, et consommatrice de temps.

Une organisation rigoureuse suppose en effet qu'il procède impérativement, dès la fin de chaque livraison, à l'enroulement des sangles utilisées, en vue de réduire leur encombrement, pour pouvoir les ranger dans un emplacement, généralement de faible volume qui leur est consacré dans le tracteur, et pour ensuite pouvoir les réutiliser aisément pour un nouvel arrimage, la sangle devant être lancée par-dessus le chargement pour passer de l'autre côté.

Du fait qu'il n'existe encore à ce jour aucun système d'enroulement de sangle motorisé, cette opération est souvent effectuée à la main, ou à l'aide d'un enrouleur manuel manoeuvré à l'aide d'une manivelle, tel que notamment celui décrit dans la publication EP 1 153 791 ou US 6,200,079. Il est également envisageable d'utiliser un enrouleur dit automatique, tel que notamment celui décrit dans la publication DE 20 2009 013029 ou US 2004/0084558 et dont le fonctionnement repose sur la présence d'un ressort de rappel enroulé en spirale, relié à une sangle et mis sous tension lors du déroulement de cette dernière.

Pour être convenablement enroulée, une sangle doit impérativement être à la fois orientée, tendue et serrée, ce qui requiert de la part d'un l'opérateur travaillant sans enrouleur une grande dextérité, une force physique importante, et se révèle très souvent source de douleurs musculaires intempestives. La nature fastidieuse de cette opération est par ailleurs accentuée dans le cas de sangles exposées aux intempéries sur des camions non bâchés. De telles sangles sont en effet fréquemment alourdies par l'eau de pluie, et nécessitent alors d'être essorées avant d'être enroulées. En outre, lorsqu'elles sont raidies par le gel, elles ne peuvent être enroulées sans avoir été préalablement réchauffées, cette opération étant à l'heure actuelle couramment effectuée par apposition des sangles sur le pot d'échappement du camion, aucune solution technique dédiée n'existant à ce jour à cet effet.

D'autre part, la mise en oeuvre des enrouleurs manuels requiert la présence de l'opérateur pendant toute la durée d'enroulement de chaque sangle. Elle est particulièrement laborieuse et impose l'utilisation d'une main pour tourner la manivelle et de l'autre main pour guider et maintenir la sangle pendant son enroulement. Enfin, les enrouleurs dits automatiques cités précédemment sont nécessairement solidaires de la sangle aussi bien enroulée que déroulée car leur principe de fonctionnement suppose le maintien de la liaison entre le ressort de rappel en spirale dont ils sont équipés et la sangle aussi bien pendant la durée d'utilisation de cette dernière que lorsqu'elle est enroulée. Par conséquent, de tels enrouleurs automatiques sont prévus pour enrouler et loger individuellement une unique sangle ce qui est onéreux et peu envisageable dans le cadre d'opérations telles que le transport de marchandises, dans lesquelles un grand nombre de sangles sont nécessaires.

Par ailleurs, la seule opération d'enroulement d'une quinzaine de sangles par camion, indépendamment de tout lavage et/ou essorage, nécessite en moyenne une demi-heure de travail durant laquelle un chauffeur de poids lourd est totalement immobilisé et ne peut se consacrer à d'autres tâches.

En outre, conformément aux méthodes de déchargement de marchandises pratiquées actuellement, les sangles sont jetées à terre à proximité du camion au fur et à mesure de leur retrait. Lorsque les opérations de déchargement sont achevées, chacune d'entre elle est ramassée individuellement et immédiatement enroulée sur place, de manière à éviter la formation d'un amas inextricable de sangles emmêlées. L'impossibilité qui en découle de déplacer un poids-lourds avant la fin de l'enroulement des sangles, a pour conséquence d'empêcher l'accès éventuel à la zone de déchargement à tout autre camion qui doit alors se placer dans une file d'attente. De même, d'éventuelles opérations de manutention de la marchandise livrée peuvent se trouver retardées pour les mêmes raisons, aucun engin de manutention ne pouvant manoeuvrer sans danger à proximité du camion pendant que le chauffeur est affairé à enrouler les sangles.

De tels inconvénients ont pour conséquence que de nombreux chauffeurs renoncent à procéder à l'enroulement des sangles, et les jettent en tas dans un recoin de leur camion, malgré le risque d'emmêlement, le cas échéant trempées, jusqu'à la prochaine utilisation. Elles subissent alors davantage de contraintes, un contact accru avec des salissures de tout genre, et l'humidité, ce qui provoque finalement leur usure prématurée et une obligation de remplacement générant d'importants frais supplémentaires. D'autre part, l'éventuel démêlage des sangles ainsi jetées en tas requiert bien souvent un temps de travail non moins négligeable que leur enroulement.

Enfin, il n'existe à ce jour aucun système permettant d'effectuer un nettoyage des sangles. Or une telle opération est non seulement essentielle pour procéder à une vérification périodique de l'état d'usure des sangles, mais permet également de se placer en conformité avec les législations de certains pays, qui imposent d'ores et déjà, comme précédemment évoqué, l'utilisation de sangles dont la propreté est le gage de leur intégrité.

### Exposé de l'invention :

La présente invention vise à pallier ces inconvénients en proposant un dispositif simple, économique, rapide, fiable, autonome et sécurisé, permettant d'automatiser l'enroulement individuel des sangles, avec en option leur nettoyage, déchargeant ainsi les chauffeurs de cette tâche récurrente et consommatrice de temps.

Dans ce but, l'invention concerne un dispositif d'enroulement automatique du genre indiqué en préambule, **caractérisé en ce que** ledit axe d'enroulement est couplé à un moteur par une transmission agencée pour, lorsque ledit moteur tourne dans un sens, entraîner en rotation ledit axe d'enroulement dans un sens et générer l'enroulement ladite sangle sur elle-même, et, lorsque ledit moteur tourne en sens inverse, entraîner en rotation ledit axe d'enroulement en sens inverse et générer le déplacement axial dudit axe d'enroulement pour éjecter ladite sangle enroulée.

Selon une première caractéristique de l'invention, lesdits moyens de guidage comportent plusieurs galets de détour disposés sur le parcours de la sangle entre ladite ouverture d'entrée et ledit axe d'enroulement.

Conformément à une variante de réalisation de l'invention, le présent dispositif comporte des moyens de démarrage dudit moteur lors de la fermeture dudit couvercle, pour entraîner ledit axe d'enroulement en rotation dans le sens de l'enroulement de ladite sangle.

De préférence, le dispositif comporte des moyens de verrouillage agencés pour verrouiller ledit couvercle en position fermée sur ledit boîtier. Dans ce cas, lesdits moyens de démarrage sont avantageusement couplés auxdits moyens de verrouillage.

Par ailleurs, le présent dispositif se caractérise également en ce qu'il comporte des moyens d'éjection de ladite sangle, une fois enroulée, hors dudit axe d'enroulement.

Dans une forme de réalisation préférentielle, les moyens d'éjection comportent des moyens de détection de la fin de l'enroulement de ladite sangle, agencés pour provoquer la rotation dudit moteur dans le sens inverse de l'enroulement de ladite sangle et déplacer axialement ledit axe d'enroulement entre une position d'enroulement et une position d'éjection.

D'autre part, lesdits moyens d'éjection comportent avantageusement un disque agencé pour, en position d'enroulement, être couplé en rotation audit axe d'enroulement et former une butée radiale contre laquelle la sangle est enroulée, et pour, en position d'éjection, autoriser le déplacement axial dudit axe d'enroulement et former une butée axiale permettant l'éjection de ladite sangle une fois enroulée dudit axe d'enroulement.

Selon une caractéristique additionnelle, le dispositif d'enroulement automatique selon l'invention comporte des moyens agencés pour permettre un nettoyage de ladite sangle.

Dans ce cas, il peut comporter une goulotte disposée au moins en partie sous lesdits moyens de guidage et agencée pour collecter l'eau de lavage de la sangle par jet d'eau. De préférence, le dispositif comporte également des moyens d'essorage de la sangle et d'évacuation de l'eau d'essorage.

Par ailleurs, le présent dispositif comporte encore de préférence des moyens de montage du boîtier sur un camion ou un tracteur selon une liaison fixe, une liaison pivotante et/ou une liaison coulissante.

### Description sommaire des dessins :

La présente invention et ses avantages apparaîtront mieux dans la description suivante d'un mode de réalisation donné à titre d'exemple non limitatif, en référence aux dessins annexés, dans lesquels:
- la figure 1 représente une vue d'ensemble en perspective du dispositif selon l'invention, avec le couvercle ouvert,
- les figures 2A et 2B représentent des vues de face de l'intérieur du dispositif représenté à la figure 1, dont le couvercle est respectivement ouvert et fermé,
- les figures 3A et 3B sont des vues en coupe du dispositif représenté à la figure 1, dont l'axe d'enroulement est respectivement en position d'enroulement et en position d'éjection.

### Illustration de l'invention et meilleure manière de réaliser l'invention:

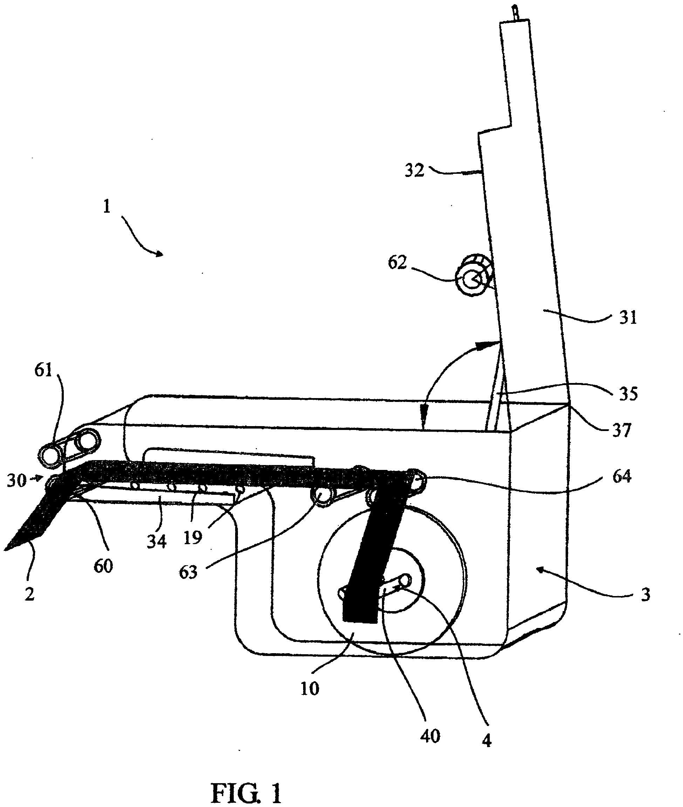

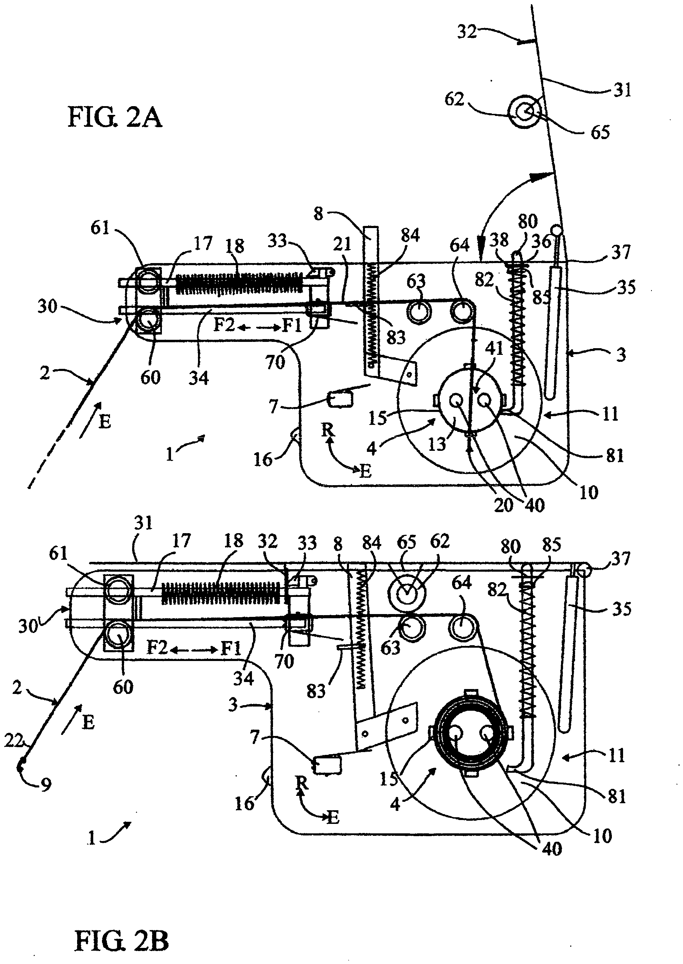

Dans la forme de réalisation représentée aux figures 1 à 3, le dispositif 1 d'enroulement automatique d'une sangle 2 comporte un boîtier 3 accueillant un axe d'enroulement 4 pouvant être entraîné en rotation par un actionneur tel qu'un moteur 5. De préférence, le boîtier 3 comporte une zone d'enroulement 11 accessible à l'utilisateur et une zone technique 12, telle qu'un double fond, dans laquelle est situé le moteur 5. Tel que visible aux figures 2A et 2B, la sangle 2 est guidée vers l'axe d'enroulement 4 depuis une ouverture d'entrée 30 du boîtier 3 au moyen de plusieurs galets de détour 60, 61, 62, 63, 64 placés sur son parcours, dans la zone d'enroulement 11. Une extrémité libre 20 de la sangle 2 est retenue dans une fente 41, définie entre les deux doigts parallèles 40 que comporte l'axe d'enroulement 4. De cette manière, la portion 21 de sangle 2 située entre l'ouverture d'entrée 30 et l'axe d'enroulement 4 demeure parfaitement orientée et tendue pendant toute la durée de l'enroulement de la sangle 2 autour de l'axe d'enroulement 4.

Dans l'exemple illustré, le boîtier 3 comporte un couvercle 31, monté pivotant autour d'une articulation 37. La fermeture du couvercle 31, suite à l'insertion de l'extrémité 20 de la sangle 2 dans la fente 41, provoque avantageusement le démarrage automatique du moteur 5, et la mise en rotation de l'axe d'enroulement 4 dans le sens horaire E de l'enroulement de la sangle 2, après mise sous tension du dispositif 1 au moyen d'un interrupteur 16. A cet effet, le couvercle 31 agit sur une tige 8 prévue dans le boîtier 3, sollicitée au moyen d'un organe de rappel 84 en direction du couvercle 31, et coopérant avec un capteur de fin de course 7 apte à donner au moteur 5 l'ordre de démarrer lorsque le couvercle 31 est verrouillé et a déplacé la tige 8 vers le bas à l'encontre de son organe de rappel 84. Ce couvercle 31 est verrouillé par exemple au moyen d'une gâche 32 solidaire du couvercle 31 coopérant avec un pêne 33 disposé dans le boîtier 3. Selon une autre forme de réalisation, le démarrage du moteur 5 peut être commandé par l'opérateur au moyen d'un bouton de commande (non représenté).

Par ailleurs, une tige 80, sur laquelle agit également le couvercle 31 en position fermée, est montée coulissante dans un guide 36 solidaire du boîtier 3 et porte un cliquet 81 sollicité en direction de l'axe d'enroulement 4 par un organe de rappel 82 pour n'autoriser la rotation dudit axe d'enroulement 4 que dans le sens horaire E d'enroulement, comme expliqué plus loin. La sangle 2 est par conséquent progressivement enroulée de manière serrée autour de l'axe d'enroulement 4.

La fin de l'enroulement de la sangle 2 est détectée par la butée contre les galets de détour 60, 61, disposés à proximité de l'ouverture d'entrée 30, de la boucle 9 dont est pourvue l'autre extrémité libre 22 de la sangle 2. Dans la forme de réalisation illustrée, ces galets de détour 60, 61 sont portés par un chariot 17 mobile en translation par rapport au boîtier 3 dans le sens des flèches F1 et F2. Ce chariot 17 est sollicité en direction de l'ouverture d'entrée 30 au moyen d'un organe de rappel 18 tel qu'un ressort, et porte également le pêne 33 des moyens de verrouillage du couvercle 31. Lorsque la boucle 9 arrive en butée contre les galets 60, 61, la portion de sangle 21 continue à être enroulée et exerce momentanément une traction sur les galets 60, 61 les déplaçant dans le sens de la flèche F1 jusqu'à dégager le pêne 33 de la gâche 32, qui déverrouille le couvercle 31 autorisant ce dernier à s'ouvrir automatiquement sous l'action d'un organe de rappel 35 tel qu'un vérin à ressort ou similaire. La tige 8 libérée par le couvercle 31 est déplacée vers le haut par son organe de rappel 84, libérant le capteur 7 commandant ainsi l'arrêt momentané du moteur 5. En poursuivant son mouvement, la tige 8 agit ensuite, par l'intermédiaire d'un cliquet 83, sur un autre capteur 70, provoquant la rotation en sens inverse du moteur 5 pour générer le retrait de l'axe d'enroulement 4 et libérer la bobine formée par la sangle 2 enroulée, comme expliqué plus loin. Selon une autre forme de réalisation, la rotation en sens inverse du moteur 5 en vue de l'éjection de la sangle 2 peut être commandée par l'opérateur au moyen d'un bouton de commande (non représenté).

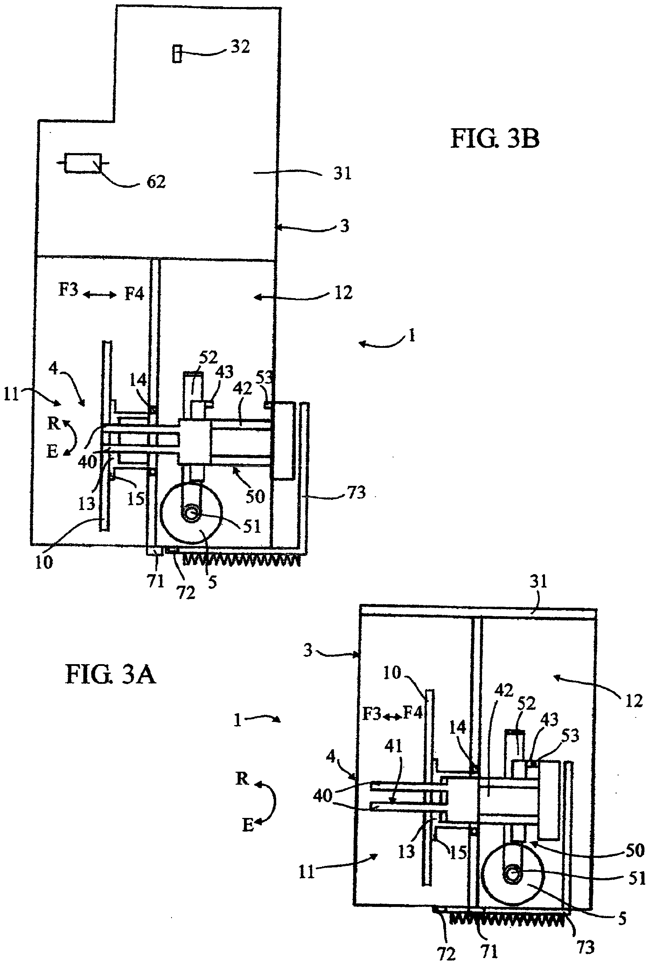

Tel que visible aux figures 3A et 3B, le moteur 5 est couplé à l'axe d'enroulement 4 au moyen d'un engrenage 50 comportant notamment une vis sans fin 51 engrenant un pignon 52 engrenant une portion filetée 42 de l'axe d'enroulement 4. Cet engrenage 50 permet non seulement la rotation dudit axe d'enroulement 4 dans le sens horaire E de l'enroulement de la sangle 2 telle que décrite précédemment, mais également la rotation dudit axe d'enroulement 4 dans le sens antihoraire R lorsque le moteur 5 tourne dans le sens inverse, et ce pour générer le déplacement axial dudit axe d'enroulement 4 dans le sens des flèches F3 ou F4. Ainsi, l'axe d'enroulement 4 est mobile entre une position d'enroulement de la sangle 2 dans laquelle les deux doigts 40 sont dressés dans la zone d'enroulement 11 du boîtier 3 et peuvent accueillir la sangle 2 (cf. fig. 3A), et une position d'éjection de la sangle 2 dans laquelle les deux doigts 40 sont en retrait dans la zone technique 12 du boîtier 3 (cf. fig. 3B).

En position d'enroulement, telle qu'illustrée à la figure 3A, l'axe d'enroulement 4 est lié en rotation avec le pignon 52, par exemple au moyen d'un doigt 43 logé dans une encoche 53, ou autre moyen équivalent. De ce fait, la rotation du moteur 5 dans le sens de l'enroulement E entraîne uniquement la rotation de l'axe d'enroulement 4 dans le sens horaire E grâce à la vis sans fin 51 et le pignon 52.

Le dispositif 1 comporte un disque 10 fixé sur un support 13, lequel est couplé au boîtier 3 par un palier à roulement 14. Le disque 10 est entraîné en rotation par l'axe d'enroulement 4 qui le traverse en son centre au travers d'un alésage de forme complémentaire aux doigts 40. Ce disque 10 sert de guide latéral en phase d'enroulement de la sangle 2 et sert de butée axiale en phase d'éjection de la sangle 2 dudit axe d'enroulement 4. A cet effet, le support 13 comporte une roue à rochet 15 ou similaire, qui coopère avec un cliquet 81 ou similaire (cf. fig. 2A et 2B), porté par la tige 80 actionnée par le couvercle 31. En phase d'enroulement, la tige 80 est abaissée, le cliquet 81 est dégagée de la roue à rochet (cf. fig. 2B) et autorise la rotation en sens horaire E du support 13 et donc du disque 10 par l'intermédiaire de l'axe d'enroulement 4. Et en phase d'éjection, lorsque la rotation du moteur 5 est inversée, après l'ouverture du couvercle 31, la tige 80 est remontée, le cliquet 81 se bloque dans la roue à rochet 15 interdisant la rotation du support 13 et donc du disque 10. La rotation en sens antihoraire R de l'axe d'enroulement 4 provoque alors le déplacement axial de cet axe 4 de la zone d'enroulement 11 vers la zone technique 12, grâce au pignon 52 engrené avec la portion filetée 42 de l'axe d'enroulement 4, libérant le doigt 43 de l'encoche 53. En outre, le dispositif 1 comporte avantageusement des moyens de réglage de l'amplitude du déplacement axial de l'axe 4 vers sa position de retrait dans la zone technique 12, en fonction de la largeur de la sangle 2 à enrouler.

Le retrait de l'axe d'enroulement 4 libère la bobine formée par la sangle 2 enroulée qui peut être saisie par l'opérateur très facilement. La position de retrait de l'axe d'enroulement 4 est détectée par un capteur de fin de course 71, actionné par un ergot 72 que porte une pièce mobile 73 couplée à l'axe 4, qui va commander l'arrêt du moteur 5 puis sa rotation en sens inverse pour replacer l'axe d'enroulement 4 en position d'enroulement. Par ailleurs, une fois cette position d'enroulement atteinte, dans laquelle les doigts 40 sont entièrement dressés dans la zone d'enroulement 11, la roue à rochet 15 agit à plusieurs reprises sur le cliquet 81 de la tige 80 dont la course est limitée par une butée 38 de la pièce 36 sur laquelle prend appui un bourrelet 85. Le dispositif 1 émet ainsi un signal sonore d'avertissement à destination d'un opérateur l'informant de la possibilité de commencer un nouveau cycle d'enroulement, ou de mettre le dispositif 1 hors tension au moyen de l'interrupteur 16. Bien entendu tout autre moyen de détection et d'avertissement est possible.

Tel qu'illustré sur les figures 1, 2A et 2B, le dispositif 1 selon l'invention comporte en outre une goulotte 34 solidaire du boîtier 3 et disposée à proximité de l'ouverture d'entrée 30 sur une partie du parcours effectué par la sangle 2 en cours d'enroulement. La goulotte 34 sert de guide facilitant un lavage à l'eau de la sangle 2 par exemple au moyen d'un jet d'eau dirigé manuellement par un opérateur ou issu d'une ou plusieurs buses de lavage directement intégrées dans le boîtier 3 à proximité de la goulotte 34. Elle permet également d'évacuer l'eau de lavage directement au travers d'une série de trous 19 formés dans son fond, ou de collecter l'eau qui sera évacuée ultérieurement.

Dans ce cas, le dispositif 1 comporte de préférence des moyens d'essorage de la sangle 2 définis, dans l'exemple illustré, par le galet de détour 62 relié au couvercle 31 au moyen d'un organe de rappel 65 tel qu'un ressort. Dans la position fermée du couvercle 31, le galet de détour 62 est en appui contre le galet de détour 63 prévu fixe par rapport au boîtier 3, et la sangle 2 est écrasée entre les deux galets 62, 63, entre lesquels elle circule.

Dans cette configuration de lavage, le dispositif 1 est avantageusement équipé de moyens permettant de provoquer son basculement vers l'avant pour provoquer l'évacuation de l'eau de lavage par gravité en direction de l'ouverture d'entrée 30 du boîtier 3.

Selon une autre caractéristique avantageuse, le dispositif 1 peut encore comporter des moyens de montage sur un camion ou un tracteur selon une liaison fixe, une liaison pivotante et/ou une liaison coulissante. A cet effet, le dispositif 1 peut par exemple comporter des pieds prolongés par des coulisses agencées pour coopérer avec des rails prévus sur le camion, une telle configuration permettant de rendre le dispositif 1 escamotable dans le tracteur du camion, ou de le démonter notamment lorsqu'il se révèle encombrant ou afin de l'installer dans un autre camion.

### Possibilités d'application industrielle :

Il ressort clairement de cette description que l'invention permet d'atteindre les buts fixés, à savoir proposer une solution pour automatiser l'enroulement d'une sangle et le cas échéant son nettoyage et son essorage, au moyen d'un dispositif compact pouvant être aisément installé sur n'importe quel camion.

La présente invention n'est pas limitée à l'exemple de réalisation décrit mais s'étend à toute modification et variante évidentes pour un homme du métier tout en restant dans l'étendue de la protection définie dans les revendications annexées.

## Revendications

1. Dispositif (1) d'enroulement automatique de sangles (2), notamment de sangles pour l'arrimage d'un chargement, comportant un boîtier (3) fermé par un couvercle (31) à l'intérieur duquel s'étendent au moins un axe d'enroulement (4) pour une sangle (2), et des moyens de guidage de ladite sangle (2) entre une ouverture d'entrée (30) que comporte ledit boîtier (3) et ledit axe d'enroulement (4), ledit axe d'enroulement (4) étant agencé pour permettre l'accrochage temporaire d'une extrémité (20) de ladite sangle (2) à enrouler, **caractérisé en ce que** ledit axe d'enroulement (4) est couplé à un moteur (5) par une transmission (50, 51, 52, 42) agencée pour, lorsque ledit moteur (5) tourne dans un sens (E), entraîner en rotation ledit axe d'enroulement dans un sens (E) et générer l'enroulement ladite sangle sur elle-même, puis, lorsque ledit moteur tourne en sens inverse (R), entraîner en rotation ledit axe d'enroulement en sens inverse (R) et générer le déplacement axial dudit axe d'enroulement pour éjecter ladite sangle enroulée..

2. Dispositif (1) selon la revendication 1, **caractérisé en ce que** lesdits moyens de guidage comportent plusieurs galets de détour (60, 61, 62, 63, 64) disposés sur le parcours de la sangle (2) entre ladite ouverture d'entrée (30) et ledit axe d'enroulement (4).

3. Dispositif (1) selon la revendication 1, **caractérisé en ce qu'**il comporte des moyens de démarrage dudit moteur (5) lors de la fermeture dudit couvercle (31), pour entraîner ledit axe d'enroulement (4) en rotation dans le sens (E) de l'enroulement de ladite sangle (2).

4. Dispositif (1) selon la revendication 3, **caractérisé en ce qu'**il comporte des moyens de verrouillage agencés pour verrouiller ledit couvercle (31) en position fermée sur ledit boîtier (3).

5. Dispositif (1) selon la revendication 4, **caractérisé en ce que** lesdits moyens de démarrage sont couplés auxdits moyens de verrouillage.

6. Dispositif (1) selon l'une quelconque des revendications précédentes, **caractérisé en ce qu'**il comporte des moyens d'éjection de ladite sangle (2), une fois enroulée, hors dudit axe d'enroulement (4).

7. Dispositif (1) selon la revendication 6, **caractérisé en ce que** les moyens d'éjection comportent des moyens de détection de la fin de l'enroulement de ladite sangle (2), agencés pour provoquer la rotation dudit moteur (5) dans le sens inverse (R) de l'enroulement de ladite sangle (2) et déplacer axialement ledit axe d'enroulement (4) entre une position d'enroulement et une position d'éjection .

8. Dispositif (1) selon l'une quelconque des revendications 6 ou 7, **caractérisé en ce que** lesdits moyens d'éjection comportent un disque (10) agencé pour, en position d'enroulement, être couplé en rotation audit axe d'enroulement (4) et former une butée radiale contre laquelle la sangle (2) est enroulée, et pour en position d'éjection, autoriser le déplacement axial dudit axe d'enroulement (4) et former une butée axiale permettant l'éjection de ladite sangle (2) une fois enroulée dudit axe d'enroulement (4).

9. Dispositif selon l'une quelconque des revendications précédentes, **caractérisé en ce qu'**il comporte des moyens agencés pour permettre un nettoyage de ladite sangle.

10. Dispositif (1) selon la revendication 9, **caractérisé en ce qu'**il comporte une goulotte (34) disposée au moins en partie sous lesdits moyens de guidage et agencée pour collecter l'eau de lavage de la sangle (2) par jet d'eau.

11. Dispositif (1) selon la revendication 10, **caractérisé en ce qu'**il comporte des moyens d'essorage de la sangle (2) et d'évacuation de l'eau d'essorage.

12. Dispositif (1) selon l'une quelconque des revendications précédentes, **caractérisé en ce qu'**il comporte des moyens de montage dudit boîtier (3) sur un camion ou un tracteur selon une liaison fixe, une liaison pivotante et/ou une liaison coulissante.
